# EUROPEAN PATENT APPLICATION

(11) **EP 4 385 925 A1**
(43) Date of publication of application: **19.06.2024**
(21) Application number: 23174597.7
(22) Date of filing: 22.05.2023
(51) Int. Cl.: B65H 19/22

(54) **METHOD AND DEVICE FOR MANUFACTURING CORELESS ROLLS, ESPECIALLY FROM STRETCH WRAP FILM**

(30) Priority: 20.05.2022 PL 44123222
(71) Applicant: Ciszewski, Karol, 42-446 Zawada Pilicka (PL); Ciszewski, Tomasz, 42-446 Zawada Pilicka (PL)
(72) Inventor: Ciszewski, Karol, 42-446 Zawada Pilicka (PL); Ciszewski, Tomasz, 42-446 Zawada Pilicka (PL)
(74) Representative: Bartula-Toch, Marta

(57) **Abstract**

The sheet of foil is wound onto two coaxial bushings in series, spaced at a distance I from each other, with a total length increased by a distance I not less than the width of the sheet. Once the roll has been formed, compressed air of constant pressure is applied to the outer ends of the sleeves on both sides, at the same time pressing the surface of the roll with a constant force, thus causing the sleeves to move apart in opposite directions, while the air fills the space inside the roll formed by the receding sleeves. The device is equipped with two coaxial bushings (1) in series, spaced from each other by a distance I, with a total length increased by a distance I not less than the width of the sheet to be wound on them, bearing in housings (2) to which hoses (3) supplying compressed air are connected;
a propeller shaft (4) of the winder connected to a rotary servo drive, controlled by a computer algorithm based on the Archimedes spiral winding increment function, and a pressure element (5) of the winder.

## Description

The subject of this invention is a method for manufacturing coreless rolls, in particular from foil, and an apparatus for manufacturing coreless rolls, in particular from foil.

Plastic foils are used as packaging, in particular to secure goods for shipping or to stabilise them during transport on a pallet. They are most often sold in rolls that are wound onto a core in the form of a cardboard sleeve; however, coreless rolls are increasingly being produced.

From the description of the invention EP1789352, a method for winding and removing coreless rolls of foil from a mandrel is known. The method is implemented by winding the foil onto the perforated walls of the mandrel. Once the roll is formed, the foil is pulled off by causing radial expansion of portions of the inner rolls of the roll by providing a flow of compressed air through an air chamber and the perforated wall of the mandrel to disengage the inner rolls of the roll from the perforated wall. At this time, the pressure drop inside the air chamber and the air flow are controlled by varying the speed of the air flow through the perforations to prevent the inner roll coils from sagging during removal.

A mandrel for winding coreless rolls of plastic foil is known from the description of the invention EP2688823. The mandrel has a tubular shape and is provided with a plurality of holes on the periphery to produce air streams directed towards the foil. The air jet reduces friction by creating an air cushion and allows the wound roll to be removed from the mandrel. The mandrel further comprises at least one axially extending internal chamber, connected directly to a source of compressed air, supplying air to the peripheral holes. A layer of hard chrome is formed on the surface of the mandrel to further reduce friction.

A similar mandrel with peripheral openings is known from the description of the invention EP2432719. Unlike the previous solution, the mandrel contains a plurality of separate air chambers aligned axially between the front and rear sections. The mandrel has an air channel and valve arrangement that closes off the multiple air channels and a rotary pneumatic coupling assembly shaped to separately supply and gradually disconnect compressed air from each individual air chamber. This allows the air pressure inside the mandrel to be regulated and limits air pressure drops. The description also discloses a method of pulling the foil off the mandrel, based on successive actuation of valves controlling the air supply to the chambers and gradual disconnection of the individual air chambers as the roll is pulled off the mandrel.

The essence of the solution of the method is that the sheet of foil is wound on two coaxial, arranged in series, spaced from each other by a distance I of sleeves with a total length increased by a distance I not less than the width of the sheet. Once the roll has been formed, compressed air of constant pressure is applied to the outer ends of the sleeves on both sides, at the same time pressing the surface of the roll with a constant force, so that the sleeves are forced apart in opposite directions, while the air fills the space inside the roll formed by the receding sleeves.

Advantageously, the distance I from the inner edges of the sleeve is between 0.1mm and 5mm.

Advantageously, air is supplied to the sleeve at a pressure of 5 to 10 Bar. Advantageously, the surface of the coil is pressed with a force of 20kg to 100kg. Advantageously, pressurised air is fed into the cavity inside the coil additionally through perforations in the side of the sleeve.

The essence of the device solution is that it is equipped with:
- two coaxial bushings, arranged in series, separated from each other by a distance I of a total length increased by a distance I not less than the width of the sheet wound on them, bearing in housings to which the compressed air supply lines are connected,
- winder propulsion shaft connected to a rotary servo drive, computer-controlled by an algorithm based on the Archimedean spiral winding increment function,
- the coil pressure element.

Advantageously, the distance I from the inner ends of the sleeves is between 0.1mm and 5mm.

Advantageously, the inner end sections of the sleeve are significantly tapered. Ideally, the ratio of the diameter of each sleeve from its outer end to the constriction to the diameter of its constricted section is between 10:1 and 15:1.

Advantageously, the surface of the sleeve is coated with Teflon.

Advantageously, the surface of the sleeve is coated with carbon fibre.

In the favourable design, the sleeve walls are perforated.

Preferably, the holes in the sleeve walls are between 0.2 and 1mm in size.

In a favourable design, each bushing is equipped with an independent drive. Advantageously, the device is equipped with a system that synchronises the uniform turnout of the bushings.

In a favourable design, each bushing is coupled to a servo controlled

The main advantage of the solution according to the invention is that it guarantees a soft roll and reduced stresses in the final reel, so that it retains its form and shape.

The use of independent drives for each sleeve allows very thin foils to be wound, even without contact. A synchronising system ensures that the mandrels run evenly, and the coating on the outer surface of the bushing sidewalls ensures trouble-free separation of the wound foil.

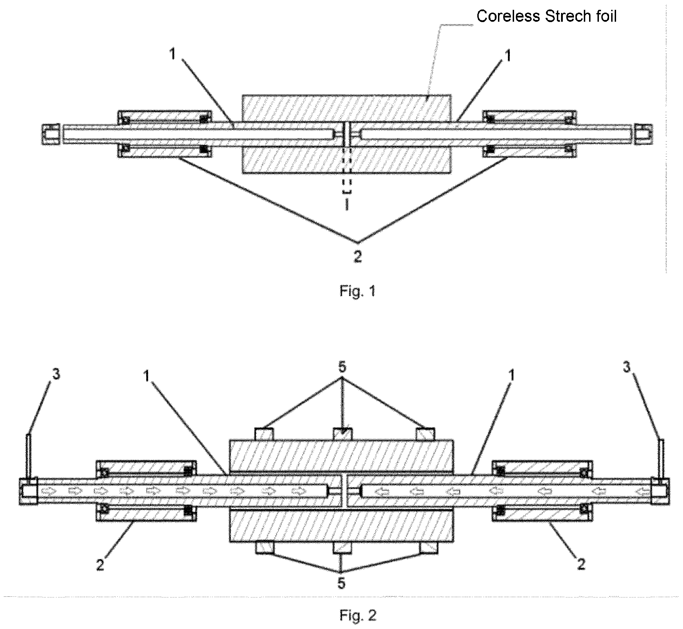

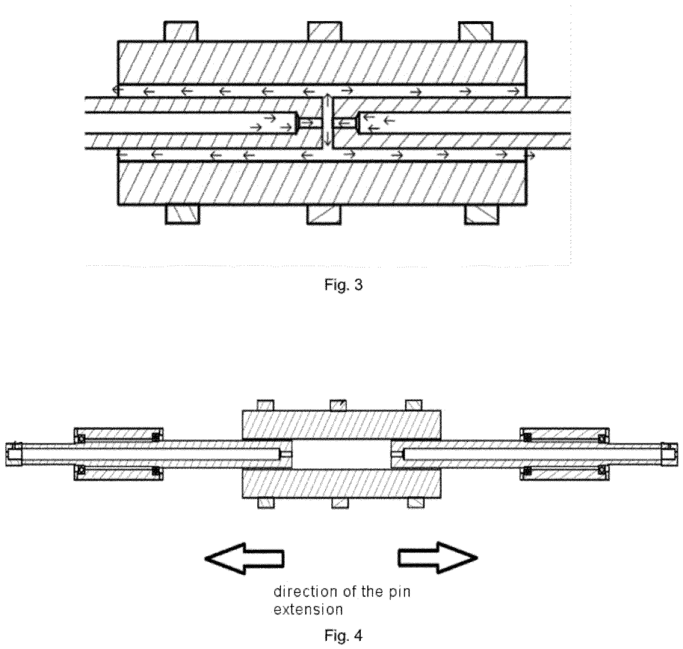

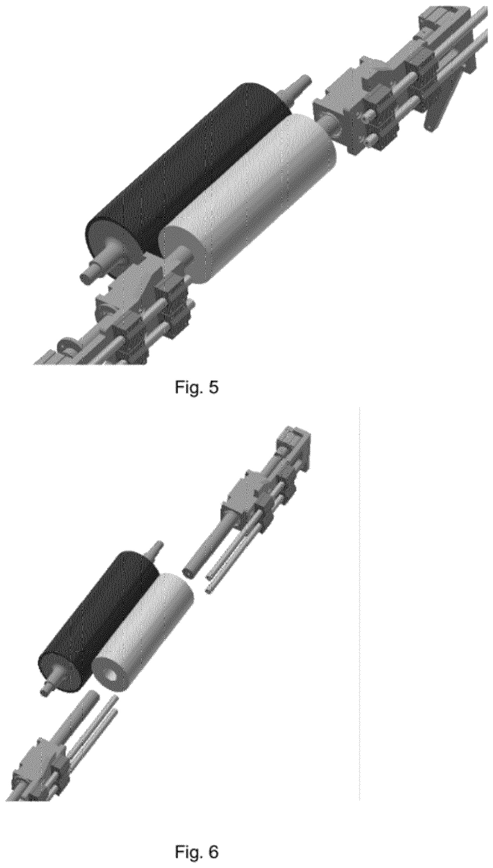

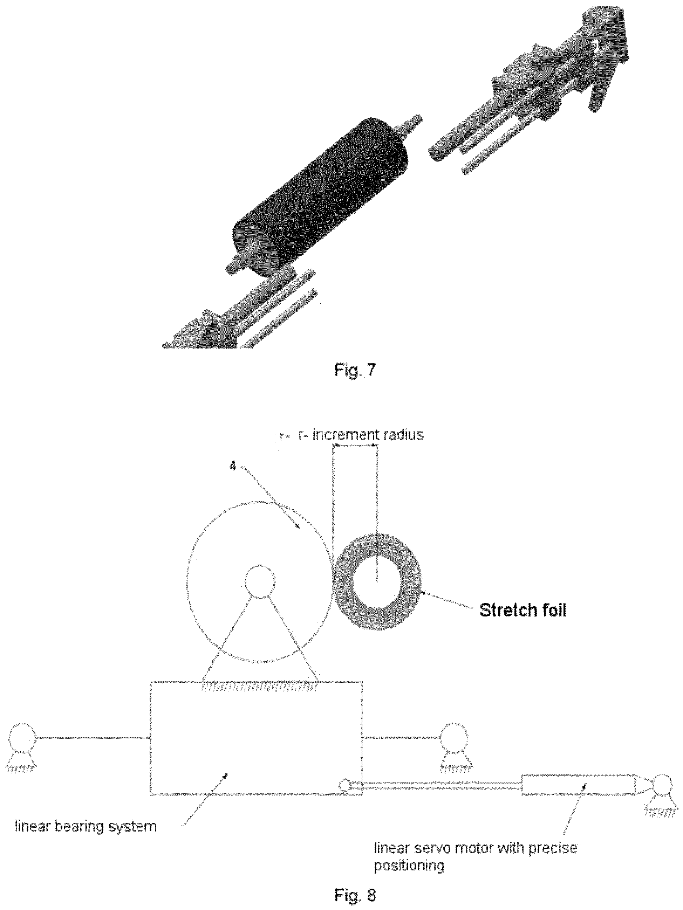

The solutions according to the inventions are illustrated by the following manufacturing examples, including the drawing, where Fig. 1 is a cross-sectional view of the device during winding up the foil, Fig. 2 is a cross-sectional view of the device during initiating the ejection of the mandrels from the new winding, Fig. 3 is a cross-sectional view of the device with the marked pattern of the fed air, Fig. Fig. 4 is a cross-sectional view of the apparatus with the direction of mandrel ejection marked, Fig. 5 is a visualisation of the apparatus with the winding, Fig. 6 is a visualisation of the apparatus with the mandrels ejected, Fig. 7 is a visualisation of the apparatus with the mandrels removed and Fig. 8 is a schematic diagram of the apparatus.

### Example I

The sheet of foil is wound onto two coaxial bushings, arranged in series and spaced from each other by a distance I, with a total length increased by a distance I not less than the width of the sheet. Once the roll has been formed, compressed air at a constant pressure of between 5 and 10 Bar is applied to the outer ends of the sleeves on both sides. At the same time, the surface of the coil is pressed down with a constant force of 20 to 100 kg. The compressed air causes the bushings to move apart in opposite directions, and the space inside the coil created by the receding bushings is filled with air to prevent the coil from collapsing inwards.

Because there are perforations in the walls of the sleeve, the compressed air escapes through the holes in the walls, making it easier to pull the sleeve out from inside the coil.

### Example II

The device has two coaxial bushings 1 arranged in series, spaced from each other by a distance I of 0.1 to 0.5 mm, whose total length increased by distance I is not less than the width of the sheet wound on them. The bushings 1 are supported in housings 2 to which the compressed air supply lines 3 are connected. In addition, the device is equipped with a propeller shaft 4 of the winder connected to a rotary servo drive, controlled by a computer algorithm based on the Archimedes' helix winding increment function, and a coil trimmer 5 operating with a force of 20 to 100 kg.

The inner end sections of sleeve 1 have a much smaller diameter than that and so, for example, with an outer diameter of sleeve 1 of 3.8 cm, the diameter of the outlet can be 3 mm, and with an outer diameter of sleeve 1 of 8 cm, the diameter of the outlet can be 8 mm.

Advantageously, the surface of the bushing 1 is coated with a friction-reducing coating, for example Teflon or carbon fibre. The sides of the bushing 1 have holes with a diameter of 0.2 to 1 mm.

Each bushing is equipped with an independent drive and is connected to a controlled servo. The process of the bushings moving away from each other is controlled by a synchronising system.

A sheet of foil is wound onto the sleeves and the resulting coil is then pressed down using a clamping element. At the same time, compressed air at a pressure of 5 to 10 Bar is fed into the outer ends of the sleeves via the feed tubes 3, which escapes through the outlets and openings in the side walls, causing the sleeve 1 to move sideways. The air forced inside the coil supports the inner layers of the coil from collapsing.

## Claims

1. A method of manufacturing coreless reels, particularly of foil, comprising winding a sheet of foil on at least one cylindrical rotating longitudinal element, **characterised by that** the sheet of foil is wound onto two coaxial bushings, arranged in series, spaced from each other by a distance I of a total length increased by a distance I not less than the width of the sheet, and after forming the roll, compressed air of constant pressure is applied to the outer ends of the sleeves on both sides, at the same time pressing the surface of the roll with a constant force, thus causing the sleeves to move apart in opposite directions, while the space inside the roll formed by the receding sleeves is filled with air.

2. Method according to claim. 1, **characterised in that** the distance I from the inner ends of the sleeves is from 0.1mm to 5mm.

3. Method according to claims. 1 or 2, **characterised in that** air is supplied to the sleeve at a pressure of 5 to 10 Bar.

4. Method according to claims. 1 or 2 or 3, **characterised in that** the surface of the coil is pressed with a force of 20kg to 100kg.
The method according to claim

5. 1 or 2 or 3 or 4, **characterised in that** pressurised air is fed into the space inside the coil additionally through perforations in the side of the sleeve.

6. An apparatus for the manufacture of coreless rolls, in particular from foil, **characterised in that** it is equipped with:
- two coaxial bushings (1) arranged in series, spaced from each other by a distance I not less than the width of the sheet to be wound on them, bearing in housings (2) to which are connected hoses (3) supplying compressed air;
- drive shaft (4) of the winder connected to a rotary servo drive, controlled by a computer algorithm based on the Archimedean spiral winding increment function;
- pressure element (5) of the reel.

7. Device according to claim. 6, **characterised in that the** distance I from the inner edges of the sleeve (1) is between 0.1 mm and 5 mm.

8. Device according to claims. 6 or 7, **characterised in that** the inner end sections of the sleeve (1) have an abruptly reduced diameter.

9. Device according to claim. 8, **characterised in that** the ratio of the diameter of each sleeve (1) from its outer end to the constriction to the diameter of its outlet is between 10:1 and 15:1.

10. Device according to claims. 6 to 9, **characterised in that** the outer surface of the sleeve (1) is coated with Teflon.

11. Device according to claims. 6 to 10, **characterised in that** the outer surface of the sleeve (1) is coated with carbon fibre.

12. device according to claims. 6 or 7 or 8, **characterised in that** the walls of the sleeve (1) are perforated.
12. Device according to claim. 11 **characterised by the fact that the** holes in the wall of the sleeve (1) have a size of 0.2 to 1 mm.

13. Device according to claims. 6 or 7 or 8 or 11, **characterised in that** each sleeve (1) is provided with an independent drive.

14. Device according to claims. 6 or 7 or 8 or 11 or 13, **characterised in that** it is provided with a system for synchronising the uniform turnout of the sleeve (1).

15. device according to claims. 6 or 7 or 8 or 11 or 13 or 14, **characterised in that** each sleeve (1) is coupled to a controlled servo.
